# EUROPEAN PATENT APPLICATION

(11) **EP 2 607 781 A1**
(43) Date of publication of application: **26.06.2013**
(21) Application number: 12199244.0
(22) Date of filing: 21.12.2012
(51) Int. Cl.: F21V 8/00, E06B 9/24

(54) **Optical screen plate**

(30) Priority: 23.12.2011 TW 100224394 U
(71) Applicant: Flos S.P.A., 25073 Bovezzo (Brescia) (IT)
(72) Inventor: Ko, Chun Min, I-25073 Bovezzo, BRESCIA (IT); Lin, Yuh Sheng, I-25073 Bovezzo, BRESCIA (IT); Hsu, Wen Tsung, I-25073 Bovezzo, BRESCIA (IT)
(74) Representative: Pulieri, Gianluca Antonio

(57) **Abstract**

An optical screen plate is disclosed. A partition is composed of a transparent material and is configured for space partition. The partition comprises a first surface and a second surface opposite thereto. A light-emitting diode set is arranged between the first and second surfaces of the partition, outputting light into the partition. A plurality of miniature structures is distributed over the first surface of the partition, refracting the light transmitted into the partition to the exterior of the partition through the first surface.

## Description

### Background of the invention

### Field of the invention

The invention relates to an optical screen plate, and more particularly to an optical screen plate capable of changing transmittance using a plurality of miniature structures distributed over a surface of a partition.

### Description of the related art

A conventional optical screen plate is applied for space partition or a decorative purpose in an office.

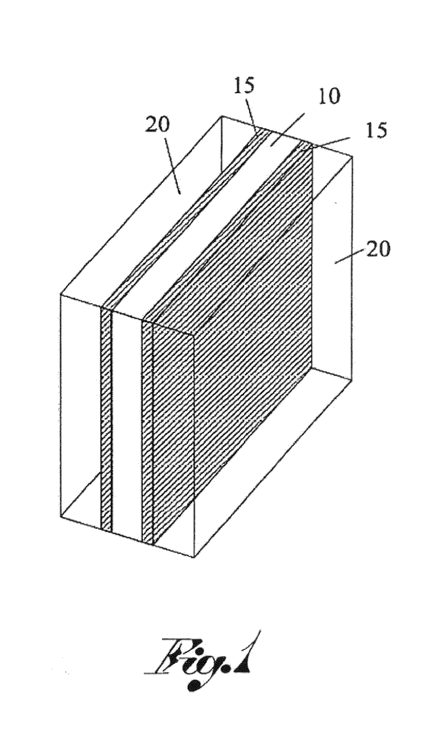

FIG. 1 shows a convention optical screen plate. The optical screen plate comprises a liquid crystal layer 10, two conductive films 15, and two plastic diaphragms 20. The liquid crystal layer 10 is interposed between the conductive films 15. By applying a voltage to the conductive films 15, an electric field is generated therebetween, controlling the direction of crystal lattices of the liquid crystal layer 10, and further controlling transmittance of light. The plastic diaphragms 20 are respectively attached to outer portions of the conductive films 15, providing anti-contamination and protective functions. As the conventional optical screen plate utilizes a number of components, structure of the conventional optical screen plate is complex and manufacturing costs thereof cannot be reduced.

### Brief summary of the invention

A detailed description is given in the following embodiments with reference to the accompanying drawings.

An object of the invention is to provide an optical screen plate with a simplified structure and reduced manufacturing costs.

An exemplary embodiment of the invention provides an optical screen plate comprising a partition, a light-emitting diode set, and a plurality of miniature structures. The partition is composed of a transparent material and is configured for space partition. The partition comprises a first surface and a second surface opposite thereto. The light-emitting diode set is arranged between the first and second surfaces of the partition, outputting light into the partition. The miniature structures are distributed over the first surface of the partition, refracting the light transmitted into the partition to the exterior of the partition through the first surface.

The light-emitting diode set comprises at least one LED.

The light-emitting diode set comprises multiple LEDs equidistantly and linearly arranged on one side of the partition.

The miniature structures distributed over the first surface of the partition are arranged in different intervals, varying a refractive angle of the light.

The miniature structures are distributed over the first surface of the partition with a disordered or regular manner.

The first and second surfaces of the partition are flat or curved.

The light-emitting diode set comprises a plurality of LEDs equidistantly and curvedly arranged on one side of the partition.

The first and second surfaces of the partition are respectively attached with a protective layer.

The protective layer is composed of transparent glass or plastic.

### Brief description of the drawings

The invention can be more fully understood by reading the subsequent detailed description and examples with references made to the accompanying drawings, wherein:

FIG. 1 is a schematic view of a conventional optical screen plate;

FIG. 2a is a schematic view of an optical screen plate of a first embodiment of the invention, wherein no light is emitted from multiple LEDs;

FIG. 2b is a schematic view of the optical screen plate of the first embodiment of the invention, wherein light is emitted from the LEDs;

FIG. 3a is a schematic view showing images displayed by the optical screen plate of the first embodiment of the invention, under a condition where no light is emitted from the LEDs;

FIG. 3b is a schematic view showing images displayed by the optical screen plate of the first embodiment of the invention, under a condition where the light is emitted from the LEDs;

FIG. 4a is a schematic perspective view of an S-shaped partition of the optical screen plate of the first embodiment of the invention;

FIG. 4b is a schematic side view of FIG. 4a;

FIG. 4c is a schematic perspective view of an inverted S-shaped partition of the optical screen plate of the first embodiment of the invention;

FIG. 4d is a schematic top view of FIG. 4c;

FIG. 5a is a schematic perspective view of an optical screen plate of a second embodiment of the invention, wherein no light is emitted from multiple LEDs; and

FIG. 5b is a schematic view of the optical screen plate of the second embodiment of the invention, wherein light is emitted from the LEDs.

### Detailed description of the invention

The following description is of the best-contemplated mode of carrying out the invention. This description is made for the purpose of illustrating the general principles of the invention and should not be taken in a limiting sense. The scope of the invention is best determined by reference to the appended claims.

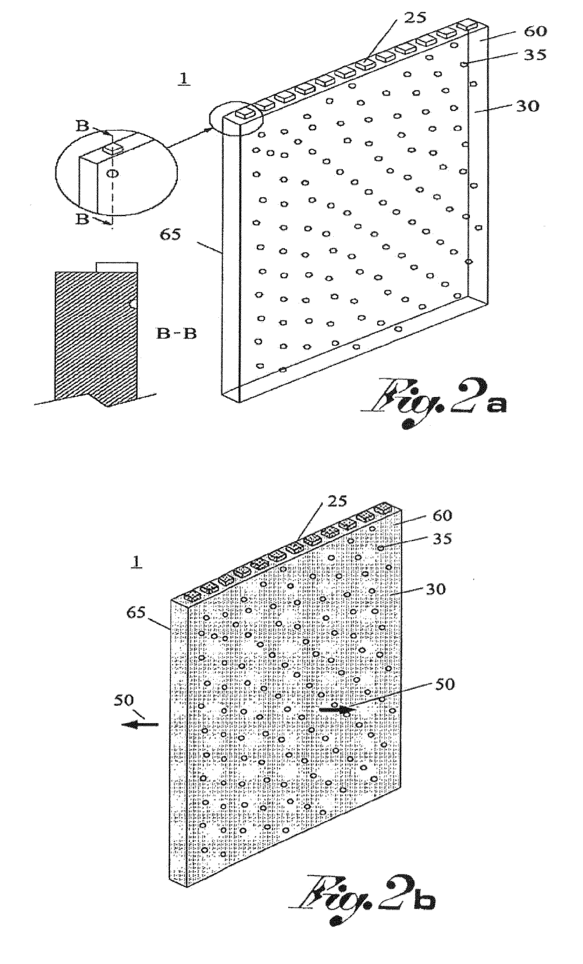

FIG. 2a is a schematic view of an optical screen plate 1 of a first embodiment of the invention. The optical screen plate 1 comprises a partition 30, at least one light-emitting diode (LED) set 25, and a plurality of miniature structures 35. The partition 30 is composed of a transparent material, such as resin or glass, and is configured for space partition. The partition 30 comprises a first surface 60 and a second surface 65 opposite to the first surface 60. Here, the first surface 60 and second surface 65 are flat surfaces.

The LED set 25 is arranged on a side, between the first surface 60 and the second surface 65, of the partition 30, outputting light into the partition 30. Here, the LED set 25 may comprise multiple LEDs equidistantly and linearly arranged on one side of the partition 30. Accordingly, when the LED set 25 comprises the multiple LEDs, the LEDs must be equidistantly and linearly arranged on the side of the partition 30, such that LED light 50 emitted from the LED set 25 is uniformly refracted to the exterior of the first surface 60 and second surface 65 of the partition 30.

The miniature structures 35, which for example are small grooves, for example obtained by laser incision, are distributed over the first surface 60 of the partition 30 with a disordered or regular manner. Alternatively, the miniature structures 35 are distributed over the second surface 65 of the partition 30 with a disordered or regular manner, varying a refractive angle of the LED light 50 transmitted into the partition 30. For example, the LED light 50 may be concentrated on a certain area, such as the middle area of the partition 30. As shown in FIG. 2a, when the LED set 25 emits no light into the partition 30, the first surface 60 and second surface 65 of the partition 30 are in a transparent mode. Although the miniature structures 35 of the optical screen plate 1 of the first embodiment of the invention are curved, the invention is not limited thereto. Moreover, the miniature structures 35 may be formed on the first surface 60 of the partition 30 by mechanical processing or an additional layer may be attached to the first surface 60 of the partition 30.

Accordingly, the optical screen plate 1 can be used in an office for the space partition. Alternatively, the optical screen plate 1 can be used with a door or a window, providing sheltering or decorative functions. Specifically, the optical screen plate 1 can provide functions of frosted glass and transparent glass. For example, when the optical screen plate 1 serves as the frosted glass, the space partition in the office can be achieved.

As shown in FIG. 2a and FIG. 2b, when the LED set 25 arranged on the top edge of the partition 30 emits the LED light 50 into the partition 30, the first surface 60 and second surface 65 of the partition 30 are in an opaque mode, such that the partition 30 can provide the functions of the frosted glass, as will be described in detail.

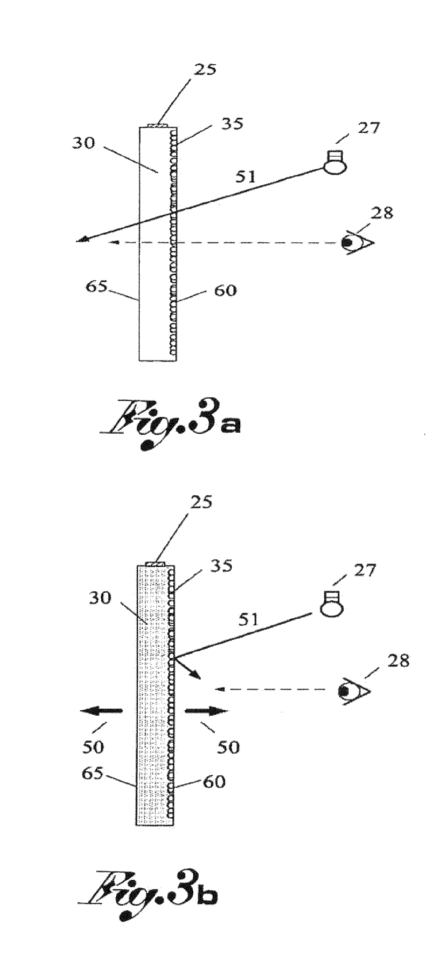

As shown in FIG. 3a, when the LED set 25 does not emit the light, the partition 30 remains in the transparent mode. At this point, external light 51 emitted from an external lamp 27 directly passes through the partition 30, such that eyes 28 of a user can see the external light 51. As shown in FIG. 3b, when the LED set 25 emits the LED light, the LED light is transmitted into the partition 30 from the side of the partition 30. When the LED light transmitted into the partition 30 contacts the miniature structures 35 distributed over the first surface 60 of the partition 30, the LED light 50 is transmitted to the exterior of the partition 30 from the first surface 60 and second surface 65 due to refraction. At this point, the eyes 28 of the user receive the sum of the light 50 output through the first surface 60 and the external light 51 emitted from the external lamp 27 and reflected by the partition 30. As the light received by the eyes 28 of the user is output from the first surface 60 of the partition 30, an image seen by the eyes 28 is the first surface 60. At this point, the partition 30 can interdict the light to provide the functions of the frosted glass. An obstruction effect provided by the partition 30 is enhanced when the external lamp 27 does not emit the external light 51. To achieve an optimal obstruction effect for the partition 30, the density or shape of the miniature structures 35 distributed over the first surface 60 of the partition 30 can be adjusted.

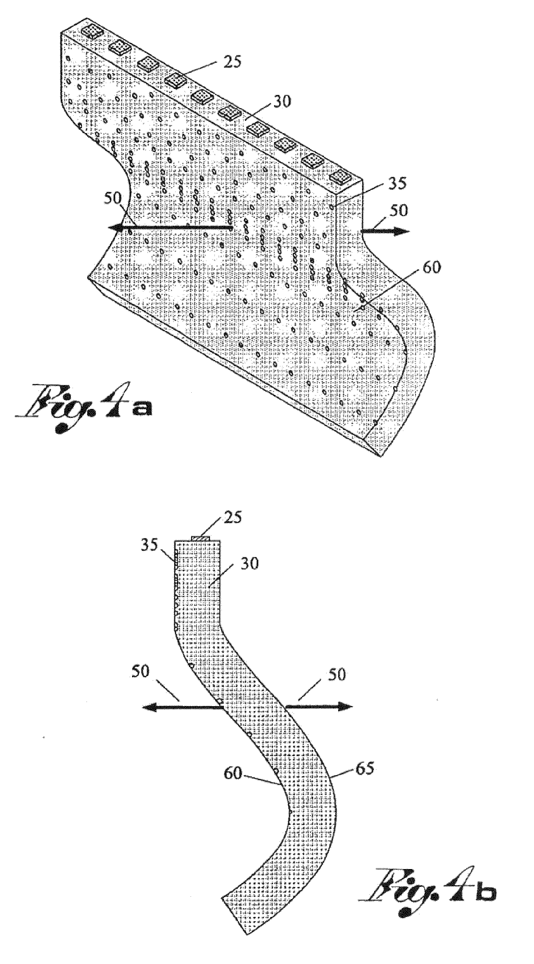

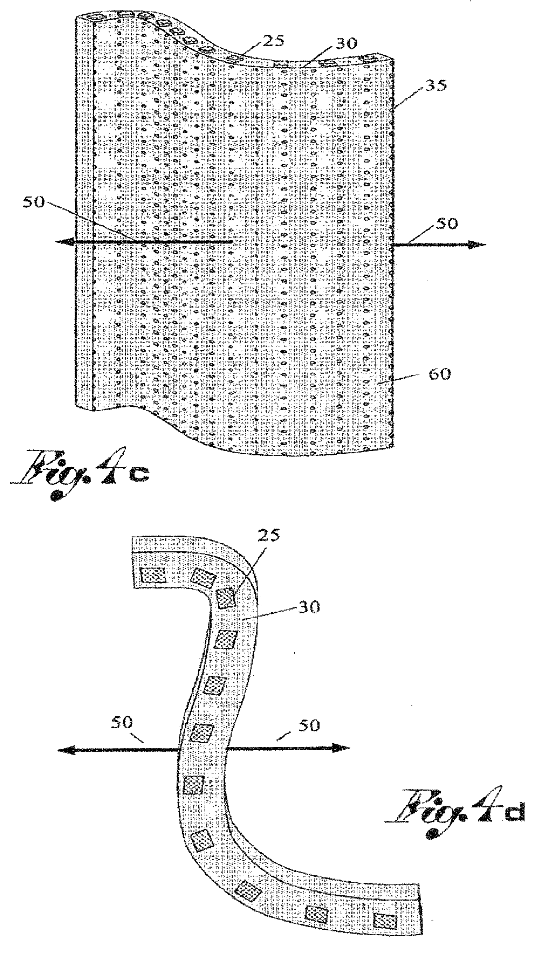

As shown in FIG. 4a, the partition 30 is S-shaped, forming the curved first surface 60 and second surface 65. The LEDs are equidistantly arranged on the top side of the partition 30. Here, the miniature structures 35 are distributed over the first surface 60 of the partition with a disordered or regular manner. When the LEDs emit the light into the partition 30, the light 50 is output from the first surface 60 and second surface 65 of the partition 30 due to refraction of the miniature structures 35. FIG. 4b is a schematic side view of FIG. 4a. Accordingly, the curved optical screen plate can provide the same effect as the optical screen plate of the first embodiment. FIG. 4c is a schematic perspective view of an inverted S-shaped partition 30 of the optical screen plate. FIG. 4d is a schematic top view of FIG. 4c. Structure, disposition, and function in FIG. 4c and FIG. 4d are the same as those in FIG. 4a and FIG. 4b, and explanation thereof is omitted for brevity.

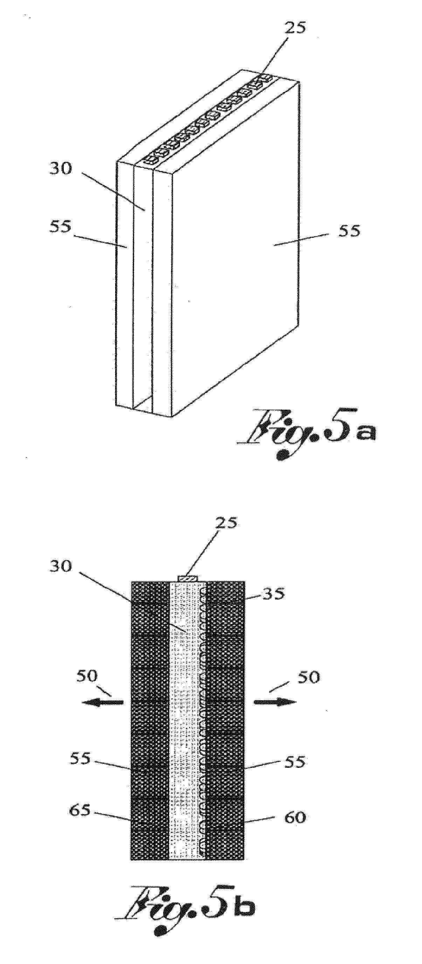

As shown in FIG. 5a and FIG. 5b, the miniature structures 35 distributed over the first surface 60 of the partition 30 of the optical screen plate may be transparent glass or plastic, unlike the miniature structures 35 formed by rigid metal. The first surface 60 and second surface 65 of the partition 30 are respectively attached with a transparent glass or a transparent plastic protective film, preventing the partition 30 and the miniature structures 35 distributed over the first surface 60 from damage due to collisions and scratches.

In conclusion, the disclosed optical screen plates of the aforementioned two embodiments can be provided with a simplified structure and reduced manufacturing costs.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. An optical screen plate, comprising:
- a partition composed of a transparent material and configured for space partition, wherein the partition comprises a first surface and a second surface opposite thereto;
- a light-emitting diode set arranged between the first and second surfaces of the partition, outputting light into the partition; and
- a plurality of miniature structures distributed over the first surface of the partition, refracting the light transmitted into the partition to the exterior of the partition through the first surface.

2. An optical screen plate according to claim 1, wherein the light-emitting diode set comprises at least one LED.

3. An optical screen plate according to claim 1 or 2, wherein the light-emitting diode set comprises multiple LEDs equidistantly and linearly arranged on one side of the partition.

4. An optical screen plate according to anyone of the preceding claims, wherein the miniature structures distributed over the first surface of the partition are arranged in different intervals, varying a refractive angle of the light.

5. An optical screen plate according to claim 4, wherein the miniature structures are distributed over the first surface of the partition with a disordered or regular manner.

6. An optical screen plate according to anyone of the preceding claims, wherein the first and second surfaces of the partition are flat or curved.

7. An optical screen plate according to anyone of the preceding claims, wherein the light-emitting diode set comprises a plurality of LEDs equidistantly and curvedly arranged on one side of the partition.

8. An optical screen plate according to anyone of the preceding claims, wherein the first and second surfaces of the partition are respectively attached with a protective layer.

9. An optical screen plate according to claim 8, wherein the protective layer is composed of transparent glass or plastic.

10. An optical screen plate according to anyone of the preceding claims, wherein the miniature structures are small grooves, for example obtained by laser incision.

11. An optical screen plate according to claim 10, wherein the miniature structures are obtained by laser incision.
